# EUROPEAN PATENT APPLICATION

(11) **EP 4 730 298 A1**
(43) Date of publication of application: **22.04.2026**
(21) Application number: 25202691.9
(22) Date of filing: 17.09.2025
(51) Int. Cl.: G08G 1/16, B60Q 1/52, B60Q 1/50, B60Q 5/00, G06V 20/58, G06V 20/59

(54) **ALIGHTER SUPPORT DEVICE**

(30) Priority: 18.10.2024 JP 2024182500
(71) Applicant: AISIN CORPORATION, Aichi 448-8650 (JP)
(72) Inventor: MIZOKAWA, Yoshihiro, Kariya, 448-8650 (JP)
(74) Representative: TBK

(57) **Abstract**

An alighter support device (1) includes a pedestrian detector (31A) that detects a pedestrian located around a vehicle (2), a moving object detector (31B) that detects a moving object that is other than the pedestrian and is moving near the vehicle (2), and a warning unit (31C) that issues a warning in response to the pedestrian detected by the pedestrian detector (31A) and the moving object detected by the moving object detector (31B) approaching each other, after an occupant gets out of the vehicle (2).

## Description

### TECHNICAL FIELD

This disclosure relates to a technique for supporting an alighter who gets out of a vehicle.

### BACKGROUND DISCUSSION

WO 2022/190438 A (paragraphs 0022 and 0026 Fig. 4) describes a getting-off assistance device that supports an occupant when the occupant gets out of a vehicle. The getting-off assistance device according to WO 2022/190438 A detects an alighting motion of an occupant who is getting out of a door of a vehicle, on the basis of image data from an in-vehicle camera. Upon detecting the alighting motion, the getting-off assistance device issues a warning signal according to a distance between an own vehicle and another vehicle, or travel speed of the another vehicle.

In the getting-off assistance device according to WO 2022/190438 A, if the another vehicle approaches the own vehicle when the occupant gets out of the own vehicle, a warning to the another vehicle is issued. However, even if it is safe when the occupant gets out of the own vehicle, another vehicle may approach the occupant who is moving near the own vehicle after getting out of the vehicle. For this reason, technology is desired capable of executing some support for the occupant who has got out of the vehicle.

A need thus exists for an alighter support device capable of reducing chances of a collision between an occupant and a moving object after the occupant gets out of the vehicle.

### SUMMARY

In order to achieve the above object, an alighter support device according to this disclosure includes a pedestrian detector that detects a pedestrian located around a vehicle, a moving object detector that detects a moving object that is other than the pedestrian and is moving near the vehicle, and a warning unit that issues a warning in response to the pedestrian detected by the pedestrian detector and the moving object detected by the moving object detector approaching each other, after an occupant gets out of the vehicle.

Note that a concept of the pedestrian in the present specification includes not only an occupant (alighter) who gets out of the vehicle but also a passer-by who walks near the vehicle. Furthermore, the concept of the pedestrian includes not only a walking person but also a person in a wheelchair, a person pushing a stroller, a baby in a stroller, and the like. Therefore, the pedestrian may include an alighter who gets out of the vehicle and moves in a wheelchair or an alighter who moves pushing a stroller. A concept of the moving object includes a vehicle such as another vehicle, a motorcycle, a bicycle, and an electric scooter, an object operated and moved by a person, such as a shopping cart and a cart, and the like.

The alighter support device according to this disclosure and having the configuration described above detects a pedestrian around the vehicle and a moving object other than the pedestrian. Then, in a case where the pedestrian and the moving object approach each other after the occupant gets out of the vehicle, it is possible to avoid a collision by issuing the warning when at least either the pedestrian or a person in the moving object does not notice the approach to the other. Therefore, it is possible to reduce chances of a collision between an occupant who has got out of the vehicle and a moving object by monitoring the occupant as a pedestrian.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a vehicle according to the present embodiment;
Fig. 2 is a block diagram showing a configuration of an alighter support device according to the present embodiment;
Fig. 3 is a flowchart of a first warning control processing program according to the present embodiment;
Fig. 4 is a diagram showing a state in which a warning is issued in a first warning mode;
Fig. 5 is a diagram showing a state in which the warning is not issued in the first warning mode;
Fig. 6 is a flowchart of a second warning control processing program according to the present embodiment;
Fig. 7 is a diagram showing a state in which a warning is issued in a second warning mode; and
Fig. 8 is a diagram showing a state in which the warning is not issued in the second warning mode.

### DETAILED DESCRIPTION

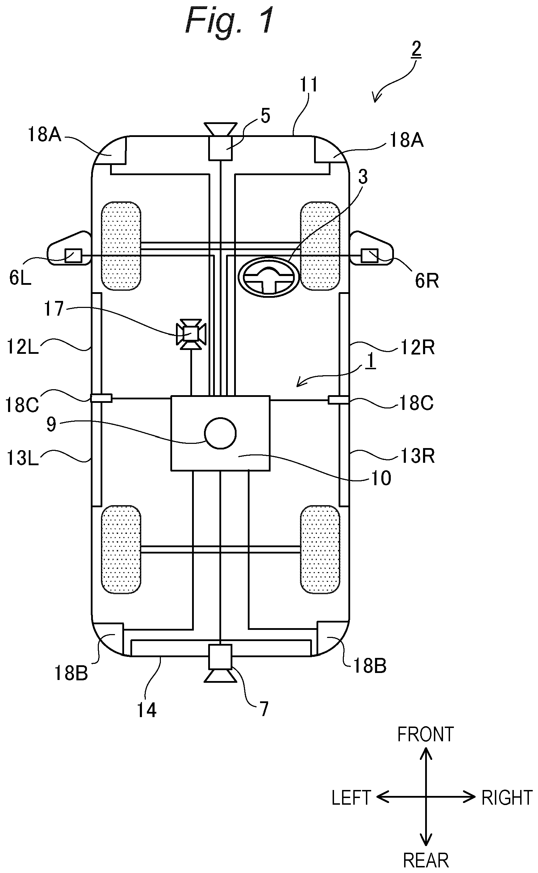

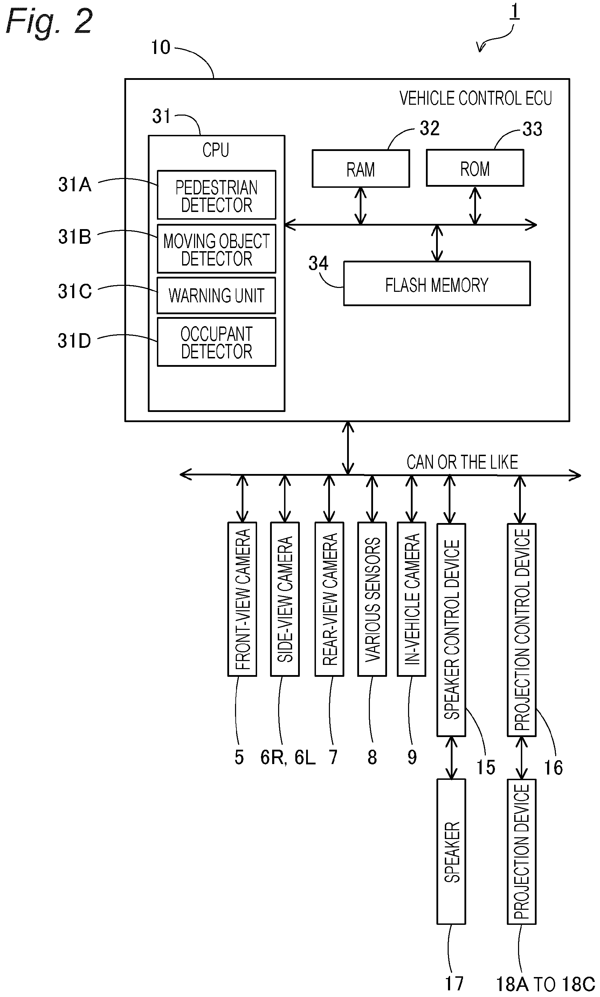

Hereinafter, an alighter support device according to one embodiment of this disclosure will be described in detail with reference to the drawings. First, a vehicle 2 equipped with an alighter support device 1 according to the present embodiment will be described below. Fig. 1 is a schematic configuration diagram of the vehicle 2 according to the present embodiment. Fig. 2 is a block diagram of the alighter support device 1 according to the present embodiment. In the following description, a front-rear direction of the vehicle 2, a left-right direction of the vehicle 2, and an up-down direction of the vehicle 2 will be simply referred to as a front-rear direction, a left-right direction, and an up-down direction, respectively. In addition, R may be added to a reference sign of a device or the like on a right side of the vehicle 2, and L may be added to a reference sign of a device or the like on a left side of the vehicle 2. Although the vehicle 2 includes basic components for the vehicle 2 in addition to the components shown in Figs. 1 and 2, there will be mainly described below a configuration related to control for issuing the warning in response to a pedestrian around the vehicle and a moving object approaching each other, and control related to the configuration.

As shown in Fig. 1, the vehicle 2 is, for example, a vehicle having a steering wheel 3 on the right side, and includes a vehicle body 11, a front door 12R on a driver seat side, a front door 12L on a passenger seat side, a rear door 13R on the driver seat side, a rear door 13L on the passenger seat side, and a back door 14. Hereinafter, the front doors 12R and 12L, the rear doors 13R and 13 L, and the back door 14 may be collectively described as each door. Each door is, for example, a swing door.

As shown in Figs. 1 and 2, the alighter support device 1 includes a front-view camera 5, side-view cameras 6R and 6L, a rear-view camera 7, various sensors 8, an in-vehicle camera 9, a vehicle control electronic control unit (ECU) 10, a speaker control device 15, and a projection control device 16. Hereinafter, the front-view camera 5, the side-view cameras 6R and 6L, and the rear-view camera 7 may be collectively referred to as vehicle exterior cameras.

Each of the vehicle exterior cameras is, for example, an imaging device such as a CCD having solid-state imaging elements, and images a periphery of a vehicle. The front-view camera 5 is attached to, for example, an upper side of a front bumper of the vehicle 2, a back side of a rear-view mirror, or the like, and is installed with an optical axis direction thereof facing a direction ahead of the vehicle 2. The side-view cameras 6R and 6L are attached to, for example, right and left side mirrors of the vehicle 2, respectively, and are installed with optical axis directions thereof being directed to sides of the vehicle 2. The rear-view camera 7 is attached, for example, above a license plate attached to a rear of the vehicle 2, and is installed with an optical axis direction thereof facing the rear of the vehicle 2.

The various sensors 8 are sensors for implementing various functions of the vehicle 2. For the sensors 8, for example, an ultrasonic sensor, a millimeter-wave radar, a laser sensor, or the like can be adopted as a sensor for detecting a person or an object around the vehicle. Alternatively, for the sensors 8, a vehicle speed sensor, an acceleration sensor, a gyro sensor, a steering sensor, a gear position sensor, or the like can be adopted as a sensor used for support when the vehicle 2 is traveling or support when the vehicle 2 is at a stop.

The in-vehicle camera 9 is an imaging device such as a CCD having solid-state imaging elements, similarly to the vehicle exterior cameras. The in-vehicle camera 9 is, for example, an omnidirectional camera (360 degree camera), and is attached to a center of a roof in the front-rear direction and the left-right direction. The in-vehicle camera 9 is attached to a vehicle interior side of the roof and can image an entire interior of the vehicle.

A speaker 17 is attached to the roof of the vehicle 2. The speaker 17 is configured to emit voice in all directions of 360 degrees under control of the speaker control device 15, for example. As a result, the warning can be issued to a pedestrian or moving object around the vehicle as described later. In addition, the speaker 17 can control a direction in which the voice is emitted under control of the speaker control device 15. Therefore, the speaker 17 can emit the voice from the vehicle 2 in a specific direction.

In addition, the vehicle 2 includes a plurality of projection devices 18A to 18C. Each of the projection devices 18A to 18C includes a light source such as an LED, for example, and projects a figure or text on a road surface or the like to issue a warning to a pedestrian or moving object around the vehicle. For example, the projection devices 18A are provided at positions of two headlights, and the projection devices 18B are provided at positions of two backup lights (taillights). The projection devices 18A and 18B may be light emission devices used also as these lights. The projection devices 18C are provided on both the left and right sides of the vehicle 2. The pair of projection devices 18C is provided, for example, at a position between the front door 12R and the rear door 13R, and at a position between the front door 12L and the rear door 13L. The plurality of projection devices 18A to 18C can project the figure or the like in all directions around the vehicle 2 under control of the projection control device 16. Each of the plurality of projection devices 18A to 18C is provided with a mechanism (such as an actuator that changes an optical axis) that changes a projection direction. By the projection direction or whether or not to perform projection being controlled under the control of the projection control device 16, the projection devices 18A to 18C can project the figure or the like from the vehicle 2 in a specific direction.

The configuration of the vehicle 2 shown in Figs. 1 and 2 is an example. For example, the vehicle 2 is not limited to a vehicle having the steering wheel 3 on the right side, and may be a vehicle having the steering wheel 3 on the left side. The vehicle 2 may be an internal combustion engine automobile using an internal combustion engine (such as an engine) as a drive source, an electric vehicle, a fuel cell-powered vehicle, or the like using an electric motor as a driving source, or a hybrid vehicle including a plurality of these drive sources. A vehicle type, the number of wheels, and the like of the vehicle 2 are not particularly limited. In addition, the vehicle 2 may be a vehicle capable of manual driving, a vehicle capable of automatic driving, or a vehicle capable of switching between both the drivings.

Attachment positions, the number, types, and the like of the vehicle exterior cameras and the in-vehicle camera 9 are examples. For example, the vehicle 2 may include a plurality of in-vehicle cameras 9. The vehicle 2 may not include the vehicle exterior cameras and the in-vehicle camera 9. In this case, the vehicle 2 may be configured to detect a pedestrian around the vehicle 2 with a millimeter-wave radar or the like.

The configuration of the speaker 17 described above is an example. The speaker 17 may be configured to emit the voice only in the specific direction. The speaker 17 may include an actuator or the like that changes a direction in which the speaker 17 emits sound. The speaker 17 may be provided at a plurality of positions in the vehicle 2, such as at the front bumper, a rear bumper, a roof, and side sills. The sound emitted from the speaker 17 is not limited to voice, and may be a horn sound or a buzzer sound. Therefore, the speaker 17 may be configured to be used as a speaker that issues the warning and is also used as a speaker that emits a horn sound. The vehicle 2 may not include the speaker 17.

The configuration of the projection devices 18A to 18C described above is merely an example. The vehicle 2 may include one of the projection devices 18A to 18C. The projection devices 18A to 18C may not include a mechanism such as an actuator that changes the projection direction. Therefore, the projection devices 18A to 18C may be configured to be able to project in a specific direction alone. The vehicle 2 may not include the projection devices 18A to 18C.

### (Vehicle control ECU 10)

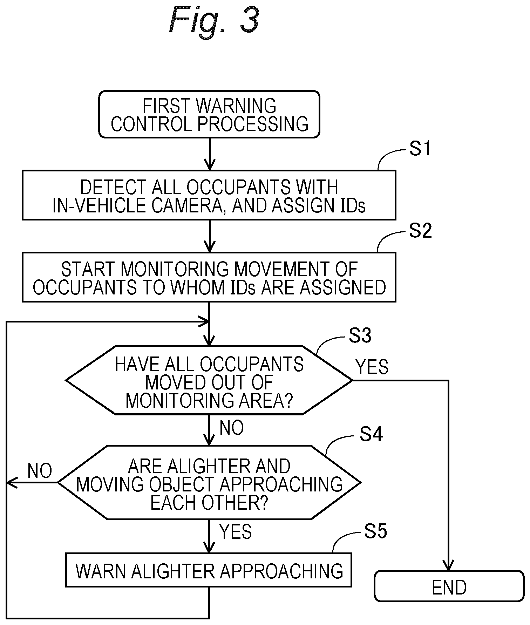

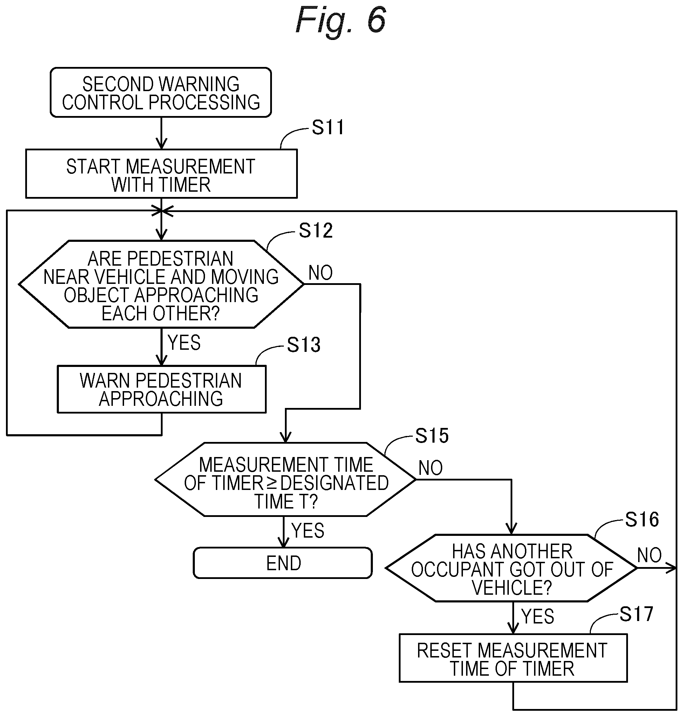

The vehicle control electronic control unit (hereinafter, simply referred to as ECU)10 is an electronic control unit that integrally controls the entire vehicle 2 including the alighter support device 1, and includes inside storage devices such as a CPU 31 as an arithmetic device and control device, a RAM 32 used as a working memory when the CPU 31 executes various kinds of arithmetic processing, a ROM 33 in which a first warning control processing program (refer to Fig. 3) and second warning control processing program (refer to Fig. 6) to be described later, and the like, in addition to a program for control, are recorded, and a flash memory 34 that stores a program and flag value read from the ROM 33.

The ECU 10 implements various functional units by executing a program with the CPU 31. For example, a pedestrian detector 31A is a functional unit that detects a pedestrian located around the vehicle 2. A moving object detector 31B is a functional unit that detects a moving object that is other than a pedestrian and is moving near the vehicle 2. A warning unit 31C is a functional unit that issues the warning in response to a pedestrian detected by the pedestrian detector 31A and a moving object detected by the moving object detector 31B approaching each other, after the occupant gets out of the vehicle 2. An occupant detector 31D is a functional unit that detects an occupant of the vehicle 2. That is, the vehicle control ECU 10 is an example of a pedestrian detector, a moving object detector, a warning unit, and an occupant detector in the present specification.

The ECU 10 is connected to the vehicle exterior cameras (the front-view camera 5 and the like), various sensors 8, in-vehicle camera 9, speaker control device 15, and projection control device 16 described above, via an in-vehicle network such as a CAN. The ECU 10 executes various calculations on the basis of information input from the vehicle exterior cameras, each sensor 8, and the in-vehicle camera 9 to control the vehicle 2. For example, the ECU 10 supports driving by displaying a bird's-eye view image or aerial view image on a monitor (not shown) of the vehicle 2 on the basis of imaging data captured by the vehicle exterior cameras.

In addition, the ECU 10 drives the speaker control device 15 to emit the voice from the speaker 17. The ECU 10 drives the projection control device 16 to project the figure or the like from the projection devices 18A to 18C. A device other than the ECU 10, which is a car navigation system for example, may execute processing of sound emission from the speaker 17 and processing of projection from the projection devices 18A to 18C.

### (First and second warning control processing programs)

Next, the first and second warning control processing programs executed by the ECU 10 in the alighter support device 1 having the configuration described above will be described. The vehicle 2 of the present embodiment includes, for example, a first warning mode for executing the first warning control processing program and a second warning mode for executing the second warning control processing program. The ECU 10 can change a mode that is executed by using a touch panel or the like of the car navigation system. First, the first warning mode will be described.

### (First warning mode)

Fig. 3 is a flowchart of the first warning control processing program according to the present embodiment. Here, for example, upon detecting that the vehicle 2 traveling has stopped, the ECU 10 starts the first warning control processing program. The first warning control processing program is a program for issuing the warning in response to a pedestrian around the vehicle and a moving object around the vehicle approaching each other, while an occupant of the vehicle 2 who has got out of the vehicle 2 moves away from the vehicle 2 by a predetermined distance. In the following description, a case where each of the occupant (alighter) who has got out of the vehicle 2 and a passer-by who has not been in the vehicle 2 but is walking near the stopped vehicle 2 is adopted as a "pedestrian located around the vehicle" in the present specification will be described. In the first warning mode, the warning is issued when the "pedestrian located around the vehicle" in the present specification is the alighter. In the second warning mode, the warning is issued when the "pedestrians located around the vehicle" in the present specification are the alighter and the passer-by. In addition, a case where a vehicle other than the vehicle 2 (hereinafter, referred to as another vehicle) is adopted as a "moving object that is other than a pedestrian and is moving near the vehicle 2" in the present specification will be described.

Therefore, the concept of the pedestrian in the present specification includes not only the occupant (alighter) who has got out of the vehicle 2 but also a passer-by who walks near the vehicle. Furthermore, the pedestrian is not limited to a person who walks. Therefore, an alighter or passer-by who moves in a wheelchair, or an alighter or passer-by who moves pushing a stroller may be adopted as the pedestrian. Other than the another vehicle, a motorcycle, a bicycle, and an electric scooter, an object operated and moved by a person, such as a shopping cart or a cart, or the like may be adopted as the moving object. In addition, for example, in a case where the alighter takes a bicycle off the vehicle 2 and rides the bicycle, the alighter on the bicycle may be regarded as the pedestrian. In addition, a passer-by who rides on a bicycle and passes by the vehicle 2 may be regarded as the "moving object that is other than a pedestrian and is moving near the vehicle 2". Therefore, the pedestrian and the moving object may be the same vehicle.

Conditions for starting execution of the first warning control processing program are not limited to the conditions described above. The ECU 10 may start the processing in Fig. 3 when a position of a shift lever is shifted to a park position after the vehicle 2 stops. The ECU 10 may start the processing in Fig. 3 upon detecting that an engine of the vehicle 2 has stopped. The ECU 10 may start the processing in Fig. 3 upon detecting that an occupant has got out of the vehicle 2 and the vehicle 2 is locked. Whether or not the occupant has got out of the vehicle 2 can be judged on the basis of which position a key of the vehicle 2 is in. The respective conditions for starting the first warning control processing program described above can also be adopted as conditions for starting the second warning control processing program to be described later. The program shown in the flowchart in Fig. 3 below is stored in the RAM 32 or ROM 33 included in the alighter support device 1, and is executed by the CPU 31.

First, in Step (hereinafter, abbreviated as S) 1 in Fig. 3, the CPU 31 detects all occupants in the vehicle 2 with the in-vehicle camera 9, and assigns IDs to all the detected occupants. Therefore, the CPU 31 assigns IDs to all the occupants in the vehicle 2 at a time when the vehicle 2 stops. For example, the CPU 31 performs image processing on imaging data captured by the in-vehicle camera 9 after detecting a stop, thereby, for example, extracting a feature value of an image, detecting, from the image, shapes and movement of persons in the vehicle 2, and judging how many occupants are present. The CPU 31 assigns different IDs to all detected occupants. Alternatively, the CPU 31 may analyze an image by using a technique of artificial intelligence (AI) to detect occupants present in the vehicle 2. As the ID, numbers, text, a character string obtained by combining them, or the like can be adopted.

Note that a method for detecting the occupants in the vehicle 2 is not limited to the method using imaging data from the in-vehicle camera 9. For example, the CPU 31 may detect the occupants in the vehicle 2 by using point cloud data of the millimeter-wave radar mounted on the vehicle 2. Therefore, the occupant detector in the present specification is not limited to using cameras, and may use millimeter-wave radars. The same applies to the pedestrian detector that detects a pedestrian located around the vehicle 2 to be described later. The pedestrian detector in the present specification is not limited to using the vehicle exterior cameras (the front-view camera 5 and the like), and may use a millimeter-wave radar that detects a person outside the vehicle 2. The CPU 31 may detect an occupant in the vehicle 2 or a pedestrian around the vehicle 2 by using both a camera and the millimeter-wave radar.

A timing when the occupants in the vehicle 2 are detected is not limited to a timing when the vehicle 2 stops. For example, the CPU 31 may detect the occupants in the vehicle 2 at a timing when the shift lever of the vehicle 2 is shifted to the park position, and assign an ID to each of the plurality of occupants. Alternatively, not limited to a timing after an occupant gets in the vehicle 2, the CPU 31 may detect the occupants in the vehicle 2 at a timing when an occupant gets in the vehicle 2 and assign an ID to each occupant. For example, when each door is unlocked in a state where no one is in the vehicle 2, the CPU 31 may detect a person around the vehicle 2 as an occupant on the basis of imaging data from the vehicle exterior cameras. Alternatively, the CPU 31 may collate between a person detected from imaging data from a vehicle exterior camera and a person detected from imaging data from the in-vehicle camera 9 to detect an occupant.

The CPU 31 may detect a person who becomes an occupant at a timing before the occupant gets in the vehicle 2, and assign an ID. For example, the CPU 31 detects a person around the vehicle 2 in response to approach of a person to the vehicle 2 or approach of the key of the vehicle 2. The CPU 31 may detect a person around the vehicle 2 on the basis of imaging data from the vehicle exterior cameras, and detect, for example, a person approaching the vehicle 2 to a location at a predetermined distance as an occupant. Alternatively, the CPU 31 may judge whether or not a person detected by the vehicle exterior cameras has intention of getting in the vehicle 2, and detect a person judged to have intention of getting in the vehicle 2 as an occupant. The CPU 31 may collate between a person detected as an occupant by the vehicle exterior cameras and a person detected by the in-vehicle camera 9 to detect an occupant. As a method for judging intention of getting in the vehicle 2, a method for the judgment based on a moving speed, deceleration position, stop position, eye level, movement of a shoulder, presence or absence of baggage, and the like of a person around the vehicle 2 can be adopted. Alternatively, a method for performing facial authentication may be adopted as the method for judging intention of getting in the vehicle 2. The CPU 31 may detect an occupant at, at least one of the above-described timings, which are when the vehicle 2 stops, when the shift lever is shifted to the park position, when an occupant gets in the vehicle 2, and before an occupant gets in the vehicle 2. Therefore, the CPU 31 may detect an occupant at a plurality of timings and collate the detected occupant.

After executing S1, the CPU 31 executes S2. In S2, the CPU 31 starts monitoring movement of the occupants to whom the IDs are assigned in S1. Upon executing S2, the CPU 31 judges whether or not all the occupants to whom the IDs are assigned have moved out of a monitoring area that is an area within a predetermined distance from the vehicle 2 (S3). As a result, the CPU 31 assigns the IDs when the occupants are in the vehicle 2, and monitors movement of an occupant who gets out of the vehicle 2, that is, until the alighter moves out of the monitoring area.

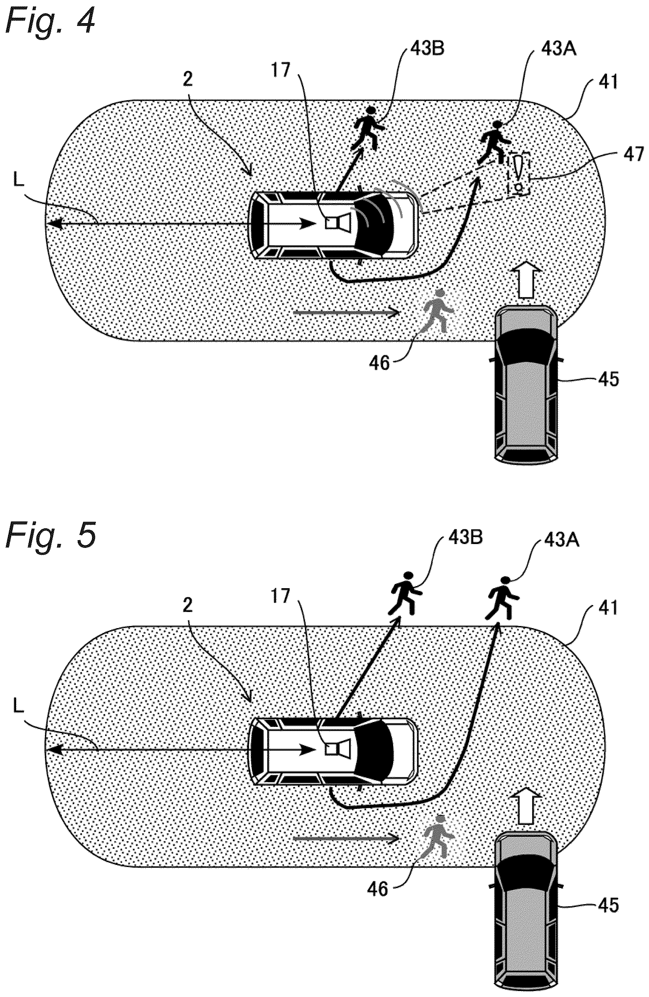

Fig. 4 shows a state in which the warning is issued in the first warning mode. As shown in Fig. 4, the CPU 31 monitors alighters in a monitoring area 41 that is an area within a predetermined distance L from the vehicle 2. The CPU 31 detects the alighters present in the monitoring area 41, on the basis of imaging data from the vehicle exterior cameras. In the example shown in Fig. 4, two alighters 43A and 43B and another vehicle 45 different from the vehicle 2 are shown. The alighter 43A is an occupant who gets out of a driver seat. The alighter 43B is an occupant who gets out of a passenger seat. Hereinafter, an example in which two alighters 43A and 43B shown in Fig. 4 are present will be described. In addition, a case where the another vehicle 45 approaches as the moving object will be described.

For example, when the two occupants are detected by the in-vehicle camera 9, the CPU 31 assigns different IDs to the respective occupants (S1). The CPU 31 monitors positions of the two occupants with the in-vehicle camera 9, and when at least one of the two occupants gets out of the vehicle 2, starts monitoring locations of the alighters 43A and 43B around the vehicle 2 on the basis of the imaging data from the vehicle exterior cameras (S2). The CPU 31 detects the locations of the alighters 43A and 43B on the basis of the imaging data from the vehicle exterior cameras, associates the locations of the alighters 43A and 43B with the IDs, and individually manages the locations of the alighters 43A and 43B. The CPU 31 periodically acquires the locations of the alighters 43A and 43B and monitors the locations while tracking the locations until all the alighters 43A and 43B move out of the monitoring area 41.

A method for monitoring the locations of the alighters 43A and 43B is not limited to a method using the imaging data from the vehicle exterior cameras as described above, and may be a method using another device such as a millimeter-wave radar. The monitoring area 41 may have an elliptical shape corresponding to a shape of the vehicle 2, or may have a circular shape centered on the center of the vehicle 2. Therefore, a position of the center of the monitoring area 41 and the predetermined distance L are appropriately changed according to the shape of the vehicle 2, a field of view of the vehicle exterior cameras, and the like. The monitoring area 41 may be a maximum area in which a person or the like can be detected on the basis of the imaging data from the vehicle exterior cameras.

In S3, the CPU 31 judges whether or not all the occupants, that is, both of the two alighters 43A and 43B, have moved out of the monitoring area 41. In a case where at least either the alighter 43A or the alighter 43B is present in the monitoring area 41, the CPU 31 makes a negative judgment in S3 (S3: NO) and executes S4. The CPU 31 may also make a negative judgment in S3 in a case where an occupant to whom an ID is assigned remains in the vehicle 2 without getting out of the vehicle 2.

In S4, the CPU 31 judges whether or not at least either the alighter 43A or the alighter 43B and the another vehicle 45 as the moving object are approaching each other. For example, the CPU 31 monitors a location, moving speed, and the like of the another vehicle 45 (moving object) on the basis of imaging data from the vehicle exterior cameras. For example, when distances between all the alighters 43A and 43B and the another vehicle 45 are longer than a predetermined reference distance, the CPU 31 makes a negative judgment in S4, that is, judges that the alighters and the moving object are not approaching (S4: NO), and executes S3 again. As a result, while the alighters 43A and 43B are present in the monitoring area 41, approach of the alighters 43A and 43B to the another vehicle 45 can be monitored.

Meanwhile, in a case where the distance between at least either the alighter 43A or the alighter 43B and the another vehicle 45 is equal to or less than the reference distance, that is, in a case where an arbitrary alighter and the moving object approach each other, the CPU 31 makes an affirmative judgment in S4 (S4: YES), and executes S5. The CPU 31 issues the warning to the alighters 43A and 43B approaching the another vehicle 45. A method for judging approach between the alighters and the moving object is not limited to the method using the reference distance described above. For example, the CPU 31 may judge the approach in consideration of the moving speed and moving direction of the alighters 43A and 43B and the another vehicle 45. Alternatively, the CPU 31 may change the reference distance in accordance with orientations of bodies of the alighters 43A and 43B. For example, the CPU 31 may make the reference distance when the alighters 43A and 43B face an another vehicle 45 side shorter than the reference distance when the alighters 43A and 43B face an opposite side of the another vehicle 45.

In S5, the CPU 31 issues the warning by using the speaker 17 and the projection devices 18A to 18C. In the example shown in Fig. 4, the alighter 43A and the another vehicle 45 are approaching each other. For example, when the CPU 31 detects that the another vehicle 45 approaches the alighter 43A and a distance between the alighter 43A and the another vehicle 45 is equal to or less than the reference distance, voice is emitted from the speaker 17 in a direction in which the alighter 43A is present (S5). The CPU 31 controls the speaker control device 15 to control a direction in which the voice is emitted from the speaker 17, and emits the voice from the speaker 17 toward the alighter 43A. In the example shown in Fig. 4, the voice is emitted from the vehicle 2 toward the alighter 43A present diagonally forward left. For example, the CPU 31 emits the voice such as "A car may be approaching. Please watch out.". As a result, the alighter 43A can recognize that the another vehicle 45 is approaching, and can avoid a collision with the another vehicle 45. In addition, a warning can be issued to a driver of the another vehicle 45 with voice, and the driver can decelerate or the like before colliding with the alighter 43A. Note that a method for warning with sound as described above is an example. For example, the CPU 31 may emit a warning sound such as a buzzer sound in all the directions of 360 degrees from the speaker 17.

The CPU 31 controls the projection control device 16 (refer to Fig. 2) to execute projection toward the alighter 43A. In the example shown in Fig. 4, the alighter 43A is present diagonally forward left of the vehicle 2. Therefore, for example, the CPU 31 controls the projection control device 16 to project a warning mark 47 (refer to Fig. 4) from the projection device 18A (refer to Fig. 1) provided at a position of a headlight toward feet of the alighter 43A. As the warning mark 47, an exclamation mark or another danger sign can be adopted. As a result, it is possible to issue the warning also with video to the alighter 43A and the driver of the another vehicle 45. Even in a state where noise around the vehicle 2 is loud and it is difficult for the alighter 43A to hear the voice from the speaker 17, it is possible to make the another vehicle 45 notice by displaying the warning mark 47 at the feet of the alighter 43A.

Note that a method for warning with projection as described above is an example. For example, the CPU 31 may project text such as "CAUTION!!" with the projection devices 18A to 18C, or may project a combination of a pattern and text. The CPU 31 may execute projection in all the directions of 360 degrees from the vehicle 2 by using all the projection devices 18A to 18C. Alternatively, the vehicle 2 may be configured to be able to display an image or text indicating the warning on a roof, a body, or the like thereof. The vehicle 2 may be configured to issue the warning with either voice or projection alone. In addition, a warning method is not limited to the method using the voice or video described above. For example, the vehicle 2 may be configured to warn the alighters 43A and 43B by turning on and rotating a warning light. The vehicle 2 may be configured to issue the warning by using a device basically provided in the vehicle 2, such as a horn, hazard lights, headlights, or backup lights.

The CPU 31 assigns IDs to the respective occupants as described above, and monitors locations of the occupants having got out of the vehicle 2 as the alighters 43A and 43B. For this reason, as shown in Fig. 4, in the first warning mode, the warning is not issued even if a passer-by 46 other than the alighters 43A and 43B approaches the another vehicle 45. The passer-by 46 is, for example, a person who is walking near a stopping position where the vehicle 2 is stopped, and is a person unrelated to an occupant in the vehicle 2. The CPU 31 does not set the passer-by 46 as a judgment target of S3 or S4 even if the passer-by 46 is detected in the monitoring area 41. Accordingly, it is possible to prevent issuing the warning to a person other than the occupants.

When the alighters 43A and 43B are not present in the monitoring area 41, that is, in a case where all the occupants have moved out of the monitoring area 41, the CPU 31 makes an affirmative judgment in S3 (S3: YES), and ends the processing shown in Fig. 3. Fig. 5 shows a state in which the warning is not issued in the first warning mode. As shown in Fig. 5, upon detecting that the alighters 43A and 43B of which locations are managed have moved out of the monitoring area 41, the CPU 31 does not issue the warning thereafter. Even after the alighters 43A and 43B have moved out of the monitoring area 41, the warning is not issued even if the passer-by 46 and the another vehicle 45 approach each other in the monitoring area 41. In this way, in the first warning mode, the CPU 31 issues the warning in response to the alighters 43A and 43B and the another vehicle 45 approaching each other in the monitoring area 41. In a case where the alighters 43A and 43B once get out of the monitoring area 41 and then return into the monitoring area 41, the CPU 31 may resume the processing from S4 in Fig. 3. The CPU 31 may end the processing in Fig. 3 when at least one of all the occupants has moved out of the monitoring area 41.

### (Second warning mode)

Next, the second warning mode will be described. Fig. 6 is a flowchart of the second warning control processing program according to the present embodiment. For example, upon detecting that an occupant has got out of the vehicle 2 and operation of closing a door is executed, the ECU 10 starts the second warning control processing program. As a method for detecting that an occupant has got out of the vehicle 2, for example, a method for the detection by using imaging data from the in-vehicle camera 9 and the vehicle exterior cameras, or a method for the detection on the basis of which position the key of the vehicle 2 is in can be adopted. The second warning control processing program is a program for issuing the warning in response a pedestrian located around the vehicle 2 and a moving object around the vehicle 2 approaching each other, while a predetermined designated time T elapses after the occupant of the vehicle 2 gets out of the vehicle 2. Therefore, in the second warning mode, the warning is issued when a pedestrian near the vehicle and a moving object approach each other, regardless of whether or not the pedestrian is an occupant. There will be described below a case where the warning is issued when the "pedestrian located around the vehicle" in the present specification is the alighters 43A and 43B and the passer-by 46.

A condition for starting the second warning control processing program is not limited to the condition described above. For example, the ECU 10 may start the processing in Fig. 6 upon detecting that all the occupants have got out of the vehicle 2 and all doors of the vehicle 2 are locked. Regardless of operation of the doors, the ECU 10 may start the processing in Fig. 6 upon detecting, on the basis of the imaging data from the in-vehicle camera 9 or the vehicle exterior cameras, that an occupant has got out of the vehicle 2. Regardless of whether or not an occupant has got out of the vehicle 2, the ECU 10 may start the processing in Fig. 6 upon detecting that an arbitrary door is opened and closed after the vehicle 2 is stopped. The program shown in the flowchart in Fig. 6 below is stored in the RAM 32 or ROM 33 included in the alighter support device 1, and is executed by the CPU 31.

First, in S11 in Fig. 6, the CPU 31 starts measuring an elapsed time with a timer. Next, the CPU 31 judges whether or not a pedestrian near the vehicle 2 and a moving object (another vehicle 45) are approaching each other (S12). Similarly to the first warning mode, upon detecting that the alighter 43A and the another vehicle 45 have approached each other up to the predetermined reference distance or less as shown in Fig. 4 (S12: YES), the CPU 31 issues warning (S13). In S13, similarly to the first warning mode, for example, the CPU 31 emits the voice from the speaker 17 toward the alighter 43A whom the another vehicle 45 is approaching, to issue the warning, and projects the warning mark 47 at the feet of the alighter 43A to issue the warning. After executing S13, the CPU 31 executes S12 again. Similarly to the first warning mode, the warning method in the second warning mode is not limited to the method described above.

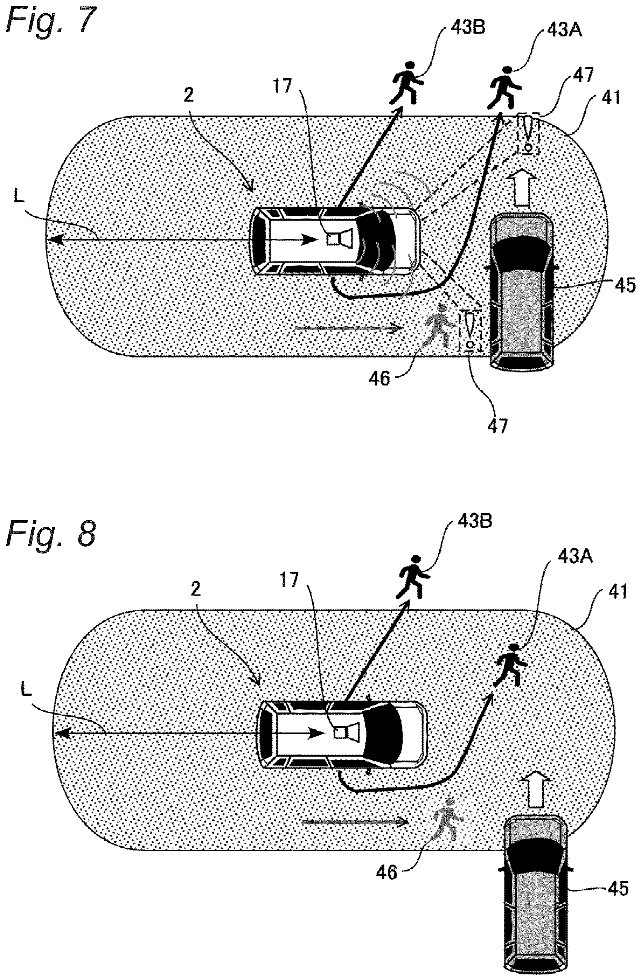

In the second warning mode, as shown in Fig. 7, in the period until the designated time T elapses, if there is a possibility that the another vehicle 45 is approaching, the CPU 31 issues the warning even if the alighters 43A and 43B have moved out of the monitoring area 41. For example, even if the alighter 43A has moved out of the monitoring area 41, upon detecting that the another vehicle 45 is approaching in a direction of the alighter 43A (S12: YES), the CPU 31 issues the warning toward the alighter 43A (S13).

In the second warning mode, in the period until the designated time T elapses, the CPU 31 issues the warning also toward the passer-by 46 (S13) in a case where the passer-by 46 in the monitoring area 41 and the another vehicle 45 approach each other (S12: YES). Therefore, in the second warning mode, the warning is issued regardless of whether or not a pedestrian near the vehicle 2 is an occupant of the vehicle 2. For example, the CPU 31 issues the warning to the alighters 43A and 43B of the vehicle 2, the passer-by 46 detected in the monitoring area 41 within the designated time T, and the another vehicle 45 detected in the monitoring area 41 within the designated time T.

When approach of a pedestrian and a moving object is not detected in S12 (S12: NO), the CPU 31 executes S15. In a case where all of the alighters 43A and 43B and the passer-by 46 in the monitoring area 41 are not approaching the another vehicle 45 (S12: NO), the CPU 31 executes S15. In S15, the CPU 31 judges whether or not a measurement time of the timer of which measurement is started in S11 is equal to or longer than the designated time T. In a case where the measurement time is equal to or longer than the designated time T, that is, in a case where the designated time T has elapsed since the start of the time measurement with the timer in S11 (S15: YES), the CPU 31 ends the processing shown in Fig. 6. Therefore, in the second warning mode, in the period until the designated time T elapses, the warning is issued when approach of a pedestrian and a moving object near the vehicle 2 is detected.

As shown in Fig. 8, in the second warning mode, the CPU 31 ends the processing in Fig. 6 after the designated time T has elapsed, thereby not issuing the warning even if the alighters 43A and 43B approach the another vehicle 45. In a case where the passer-by 46 and the another vehicle 45 in the monitoring area 41 are approaching each other, the CPU 31 also does not issue the warning after the designated time T has elapsed.

In a case where the measurement time of the timer is shorter than the designated time T in S15 (S15: NO), the CPU 31 judges whether or not another occupant has got out of the vehicle 2 (S16). Here, the another occupant is an occupant other than the occupant serving as a trigger for starting the processing in Fig. 6. For example, in a case where the CPU 31 does not detect that the another occupant gets out of the vehicle 2 and performs operation of closing a door (S16: NO), the processing from S12 is executed again. In this case, the CPU 31 continues the measurement of the measurement time as is.

Meanwhile, upon detecting that the another occupant has got out of the vehicle 2 and has performed the operation of closing the door (S16: YES), the CPU 31 resets the measurement time of the timer to zero (S17). After executing S17, the CPU 31 executes the processing from S12 again. As a result, for example, in a case where the CPU 31 detects that the occupant (alighter 43B) in the passenger seat gets out of the vehicle 2 first and closes the front door 12L, starts the processing from S11, and then detects that the occupant (alighter 43A) in the driver seat gets out of and closes the front door 12R before the designated time elapses (S15: NO), the CPU 31 resets the measurement time (S17), and continues monitoring the pedestrian and the moving object. In a case where the second warning mode is set in this way, the CPU 31 monitors the pedestrian and the moving object approaching each other until the designated time T elapses.

In a case where an occupant other than the occupant serving as the trigger for starting the processing in Fig. 6 gets out of the vehicle 2 after the CPU 31 ends the processing in Fig. 6, the CPU 31 may execute the processing in Fig. 6 again. For example, in a case where the CPU 31 detects that the occupant (alighter 43B) in the passenger seat gets out of the vehicle 2 first and closes the front door 12L, starts the processing from S11, and then detects that the occupant (alighter 43A) in the driver seat gets out of and closes the front door 12R after the designated time T has elapsed (S15: YES), and the CPU 31 ends the processing in Fig. 6, the CPU 31 may start the processing from S11 again.

Incidentally, a relationship between content of the present specification and terms used in the embodiment described above is as follows. In the embodiment described above, the alighters 43A and 43B and the passer-by 46 are examples of pedestrians in the present specification. The another vehicle 45 is an example of a moving object.

### (Effects of present embodiment)

As described above in detail, the present embodiment has the following effects.
(1) According to the alighter support device 1 according to the present embodiment and a computer program executed by the alighter support device 1, the CPU 31 of the ECU 10 detects pedestrians (alighters 43A and 43B, and passer-by 46) located around the vehicle 2 (S3, S4, S12). The CPU 31 detects the moving object (another vehicle 45) that is other than the pedestrians and is moving near the vehicle 2 (S4, S12). After the occupants get out of the vehicle 2, the CPU 31 issues the warning in response to the pedestrians and the another vehicle 45 approaching each other (S5, S13).
   Accordingly, in a case where the pedestrians and the moving object approach each other after the occupants get out of the vehicle 2, it is possible to avoid a collision by issuing the warning when at least one of the pedestrians (alighters 43A and 43B, and passer-by 46) or, a driver or the like of the another vehicle 45 does not notice the other approaching. Therefore, it is possible to reduce chances of a collision between an occupant who has got out of the vehicle and a moving object by monitoring the occupant as a pedestrian.
(2) In the first warning mode, the CPU 31 issues the warning to the alighters 43A and 43B who get out of the vehicle 2. In a period from the occupants get out of the vehicle 2 until the alighters 43A and 43B move away from the vehicle 2 by the predetermined distance L, the CPU 31 issues the warning in response to the detected alighters 43A and 43B and the another vehicle 45 approaching each other (S4: YES, S5). The CPU 31 does not issue the warning after the alighters 43A and 43B have moved away from the vehicle 2 by the predetermined distance L (S3: YES).
   Accordingly, the warning can be issued to an occupant present in the monitoring area 41 within the predetermined distance L from the vehicle 2 when a collision with the another vehicle 45 may occur. It is possible to avoid a collision between the occupant and the moving object until the occupant moves out of the monitoring area 41. For example, in a case where the alighters 43A and 43B stay in the monitoring area 41 for a long time, working around the vehicle 2 after getting out of the vehicle 2 or talking with a passer-by or the like, it is possible to monitor a moving object approaching the alighters 43A and 43B.
(3) In the first warning mode, the CPU 31 detects occupants of the vehicle 2 (S1). The CPU 31 detects each of all the detected occupants as a pedestrian, after the occupants get out of the vehicle 2. Until all the detected occupants (alighters 43A and 43B) move away from the vehicle 2 by the predetermined distance L, the CPU 31 issues the warning in response to pedestrians (occupants) and the moving object approaching each other.
   Accordingly, in a case where a plurality of occupants is in the vehicle 2, all the occupants can be monitored as pedestrians. It is possible to warn of the approach to the moving object until all the occupants become the alighters 43A and 43B and move out of the monitoring area 41 within the predetermined distance L. It is possible to ensure safety until all the occupants move out of the monitoring area 41.
(4) In the second warning mode, the CPU 31 issues the warning regardless of whether or not a pedestrian around the vehicle 2 is an occupant who has got out of the vehicle 2. The CPU 31 issues the warning in response to the pedestrian and the moving object approaching each other, while the predetermined designated time T elapses after the occupant gets out of the vehicle 2 (S15: NO) (S12: YES, S13). After the designated time T elapses (S15: YES), the CPU 31 does not issue the warning.

Accordingly, the warning can be issued to a pedestrian present around the vehicle 2 regardless of whether or not the pedestrian is an occupant, while the predetermined designated time T elapses after the occupant gets out of the vehicle 2. For an occupant and a pedestrian other than the occupant, it is possible to avoid contact between a pedestrian around the vehicle 2 and the moving object. After the designated time T has elapsed, the monitoring of the approach is terminated. As a result, it is possible to end the monitoring when the alighters 43A and 43B stay around the vehicle 2 for a long time, working around the vehicle 2 or talking with a passer-by or the like, after getting out of the vehicle 2. It is possible to reduce consumption of a battery of the vehicle 2, and it is possible to reduce chances of occurrence of problems such as deterioration or drainage of the battery. In addition, it is not necessary to judge whether or not the pedestrian around the vehicle 2 is an occupant, and the warning can be issued without judgment processing. Even in the vehicle 2 without the in-vehicle camera 9, the warning can be issued only by a vehicle exterior camera.

Note that this disclosure is not limited to the above-described embodiments, and various improvements and modifications may be made without departing from the gist of this disclosure.
- For example, content of the processing, an order of the processing, and the like in the flowcharts in Figs. 3 and 6 in the embodiment described above are examples.

For example, in the embodiment described above, the warning is issued in both the cases where the pedestrian approaches the moving object and where the moving object approaches the pedestrian. However, this disclosure is not limited thereto. The CPU 31 may issue the warning only when the moving object is approaching the pedestrian. For example, the CPU 31 may issue the warning when the moving object is moving and a distance between the pedestrian and the moving object is equal to or less than the reference distance. The CPU 31 may not issue the warning when the pedestrian is approaching the moving object.

The CPU 31 may measure the elapsed time in the first warning mode. In the first warning mode, even if the alighters 43A and 43B and the another vehicle 45 have approached each other in the monitoring area 41 up to the reference distance or less, the CPU 31 may not issue the warning in a case where the designated time T has elapsed. In the first and second warning modes, the CPU 31 may resume the monitoring in a case where the elapsed time from the start of the monitoring has elapsed by the designated time T and the monitored passer-by has started moving again after the end of the monitoring. For example, in the first warning mode, in a case where the alighters 43A and 43B to whom IDs are assigned stop in the monitoring area 41, the designated time T elapses, the CPU 31 ends the processing in Fig. 3, and then the alighters 43A and 43B move again from a location where they are when the processing in Fig. 3 ends, the CPU 31 may monitor an approach between the alighters 43A and 43B and the another vehicle 45, and issue the warning. In the second warning mode, in a case where the designated time T elapses, the CPU 31 ends the processing in Fig. 6, and then a pedestrian present in the monitoring area 41 starts moving again, the CPU 31 may monitor an approach between the pedestrian and the another vehicle 45, and issue the warning.

In the second warning mode, in a case where pedestrians (alighters 43A and 43B and passer-by 46) have moved out of the monitoring area 41, the CPU 31 may not issue the warning.

The CPU 31 may be configured to be able to execute either the first warning mode or the second warning mode.

In the embodiment described above, the ECU 10 of the alighter support device 1 executes the processing of the first warning control processing program (Fig. 3) and second warning control processing program (Fig. 6). However, the executor can be appropriately changed. For example, a controller of a navigation device or another on-vehicle device may execute the processing in Figs. 3 and 6.
- A configuration of the alighter support device 1 is not limited to the configuration of the embodiment described above. For example, the alighter support device 1 may include the ECU 10 alone, or may include the ECU 10 and a vehicle exterior camera alone.

Next, technical ideas derived from the content of the above embodiment will be described.
(a) The alighter support device according to Claim 3, in which
   the occupant detector
   assigns an ID to each of a plurality of occupants in a case where a plurality of occupants is in the vehicle, and
   the pedestrian detector
   manages locations of all occupants who have got out of the vehicle, on the basis of the IDs assigned by the occupant detector, while each of all occupants who has got out of the vehicle moves away from the vehicle by the predetermined distance.

Accordingly, in a case where a plurality of occupants is in the vehicle, it is possible to assign an ID to each of the plurality of occupants and monitor the location and movement of each of the occupants. The occupants present in an area within the predetermined distance from the vehicle are managed with the IDs, and locations of the occupants to whom the IDs are assigned are managed so as to track the locations, by which a collision between the managed occupants and the moving object can be avoided.

(b) The alighter support device according to Claim 4, in which
the occupant detector detects the occupants of the vehicle and assigns the ID to each of the plurality of occupants at, at least one of a timing when the vehicle stops, a timing when a shift lever of the vehicle is shifted to a park position, a timing when an occupant gets in the vehicle, and a timing before an occupant gets in the vehicle.

Accordingly, it is possible to detect people present in the vehicle as the occupants, at a timing when the vehicle stops or the shift lever is shifted, and to manage, with the IDs, locations and the like of the detected occupants after the occupants get out of the vehicle. In addition, even in a case where an occupant is detected at the timing when the occupant gets in the vehicle, a location and the like of the occupant detected at the timing when the occupant gets in the vehicle can be managed with the ID, after the vehicle stops. In addition, in a case where an occupant is detected before the occupant gets in the vehicle, for example, a person before getting in the vehicle is detected by the vehicle exterior cameras or the like. In this case, unlike an in-vehicle camera that generally detects an upper body of a person, an entire body of the person can be detected by using a camera, a millimeter-wave radar, or the like that images outside of the vehicle. Therefore, by capturing the whole body of the person around the vehicle before getting in the vehicle, it is possible to more accurately detect an occupant and assign an ID. It is possible to reduce chances of occurrence of erroneous detection by the occupant and reliably assign IDs to all the occupants.

(c) The alighter support device according to Claim 5, in which,
in a case where a plurality of occupants is in the vehicle,
the warning unit
issues a warning in response to the pedestrian detected by the pedestrian detector and the moving object detected by the moving object detector approaching each other, while the predetermined designated time elapses after an arbitrary occupant gets out of the vehicle, and
resets a measurement time and starts measurement of the designated time from beginning, in a case where another occupant has got out of the vehicle before the designated time elapses.

Accordingly, in a case where another occupant gets out of the vehicle during the measurement of the elapsed time, the measurement time can be reset and the monitoring can be continued. Time until the designated time elapses can be prevented from being shortened for an occupant who gets out of the vehicle later, monitoring can be executed for the designated time after the occupant getting out of the vehicle, and a collision with the moving object can be avoided.

(d) The alighter support device according to Claim 1 or 2, in which
the warning unit
issues a warning by using at least sound or light, and, in a case where the pedestrian detected by the pedestrian detector and the moving object detected by the moving object detector approach each other, issues a warning by emitting at least the sound or the light toward the pedestrian.

Accordingly, sound or light is generated toward the pedestrian the moving object is approaching. By enhancing directivity of the sound or light, it is possible to allow the pedestrian to recognize the warning more reliably. In a case where surroundings of the vehicle are bright or light is blocked by an object, it is possible to allow the pedestrian to recognize the warning by enhancing the directivity of the sound. In a case where surroundings of the vehicle are noisy, it is possible to allow the pedestrian to recognize the warning by enhancing the directivity of the light. It is possible to more reliably avoid a collision between a pedestrian and a moving object.

## Claims

1. An alighter support device (1) comprising:
a pedestrian detector (31A) that detects a pedestrian located around a vehicle (2);
a moving object detector (31B) that detects a moving object that is other than the pedestrian and is moving near the vehicle (2); and
a warning unit (31C) that issues a warning in response to the pedestrian detected by the pedestrian detector (31A) and the moving object detected by the moving object detector (31B) approaching each other, after an occupant gets out of the vehicle (2).

2. The alighter support device (1) according to Claim 1, wherein
the warning unit (31C)
issues a warning in a case where the pedestrian detected by the pedestrian detector (31A) is an occupant who has got out of the vehicle (2),
issues a warning in response to the pedestrian detected by the pedestrian detector (31A) and the moving object detected by the moving object detector (31B) approaching each other, while an occupant who has got out of the vehicle (2) moves away from the vehicle (2) by a predetermined distance (L) after the occupant gets out of the vehicle (2), and
does not issue a warning after an occupant who has got out of the vehicle (2) moves away from the vehicle (2) by the predetermined distance (L).

3. The alighter support device (1) according to Claim 2, further comprising an occupant detector (31D) that detects an occupant of the vehicle (2), wherein
the pedestrian detector (31A) detects each of all occupants detected by the occupant detector (31D) as the pedestrian, after each of all the occupants gets out of the vehicle (2), and
the warning unit (31C) issues a warning in response to the pedestrian detected by the pedestrian detector (31A) and the moving object detected by the moving object detector (31B) approaching each other, while all occupants detected by the occupant detector (31D) move away from the vehicle (2) by the predetermined distance (L).

4. The alighter support device (1) according to Claim 3, wherein
the occupant detector (31D) assigns an ID to each of a plurality of occupants in a case where a plurality of occupants is in the vehicle (2), and the pedestrian detector (31A) manages locations of all occupants who have got out of the vehicle (2), on the basis of the IDs assigned by the occupant detector (31D), while each of all occupants who has got out of the vehicle (2) moves away from the vehicle (2) by the predetermined distance (L).

5. The alighter support device (1) according to Claim 1 or 2, wherein
the warning unit (31C)
issues a warning regardless of whether or not the pedestrian detected by the pedestrian detector (31A) is an occupant who has got out of the vehicle (2),
issues a warning in response to the pedestrian detected by the pedestrian detector (31A) and the moving object detected by the moving object detector (31B) approaching each other, while a predetermined designated time (T) elapses after an occupant gets out of the vehicle (2), and
does not issue a warning after the designated time (T) has elapsed.
